Europäisches Patentamt

European Patent Office

Office européen des brevets

(11) Publication number: **0 031 858**
A1

# (12) EUROPEAN PATENT APPLICATION

(21) Application number: 79303070.1

(22) Date of filing: 28.12.79

(51) Int. Cl.³: **A 01 M 1/12**

(43) Date of publication of application:
15.07.81 Bulletin 81 28

(84) Designated Contracting States:
AT BE CH DE FR GB IT LU NL SE

(71) Applicant: CHEN, HUANG SHWU JEN
No. 114-1, Shuang Yuan Street
Taipei(TW)

(72) Inventor: CHEN, HUANG SHWU JEN
No. 114-1, Shuang Yuan Street
Taipei(TW)

(74) Representative: Allard, Susan Joyce et al,
BOULT, WADE & TENNANT 27 Furnival street
London EC4A 1PQ(GB)

(54) An automatic trap for catching cockroach.

(57) An automatic trap for catching cockroach mainly includes an automatic control mechanism. As cockroaches enter into the trap, they will inevitably touch a switch (28) of said automatic control mechanism (10) to drive a slipping plate (24) forward and further to automatically sweep these cockroaches into a confinement cell (36). After that, the slipping plate (24) will be also automatically back to its original position, restoring the control function of the automatic control mechanism, which is the particularly advantageous feature of the invention.

FIG.1

FIG.3

EP 0 031 858 A1

- 1 -

AN AUTOMATIC TRAP FOR CATCHING COCKROACH

The invention relates to an automatic trap for catching cockroach and, more particularly, to an automatic trap for catching cockroach with novel and simple construction, having an automatic control mechanism.

Heretofore, with reference to the method of killing or catching cockroaches, people are almost by spreading aerosol insecticide directly on the body of cockroaches or over the places at where cockroaches usually appear. Consequently, carcasses of cockroaches always spread over the floor making our living circumstance so dirty. Especially, most of cockroaches like to live or hide in place of crack or darkness, so make us more uneasy to clean out the carcasses.

Therefore, the primary object of the invention is to overcome those inconveniences to people and to provide an automatic trap for catching cockroach having novel and simple construction which certainly has an improved effect.

Another object of the invention is to disclose an automatic trap for catching cockroach which includes an automatic control mechanism. As cockroaches enter into the trap, they will inevitably touch a switch of said automatic control mechanism to drive a slipping plate forward and further to automatically sweep these cockroaches into a confinement cell. After that, the slipping plate will be also automatically back to its original position, restoring the control function of the automatic control mechanism, which is the particularly advantageous feature of the invention.

A further object of the invention is to provide an automatic trap for catching cockroach, which has the advantage of automatic control operation with completeness.

One way of carrying out the invention is described in detail below with reference to drawings which illustrate only one specific embodiment, in which:-

Figure 1 is a partially perspective view of an automatic trap for catching cockroach according to the invention.

Figure 2 is a view of the invention, including a perspective view while the slipping plate is moving on the rail and a view showing relative position between the slipping plates and the electric current reversing switch.

Figure 3 is a partial plane view of the inner side of the trapping house.

Figure 4 is a plane view of the transmission mechanism on the upper part of the invention.

Figure 5 is a view showing relative position between the first clutching-pully and the second clutching-pully.

Figure 6 is a view showing the closing and opening of the turning plate.

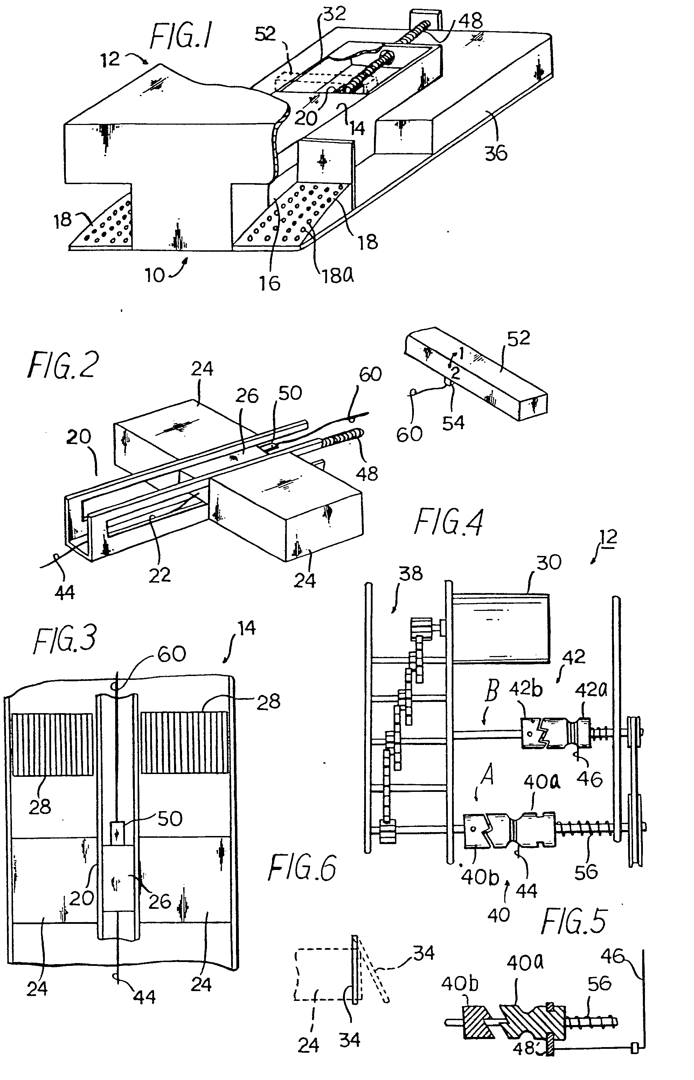

Referring Figure 1, the automatic trap for catching cockroach according to the present invention is mainly divided into two parts, including the upper part, as trapping mechanism 10, and the lower part, as transmission mechanism 12.

The trapping mechanism 12 is comprised of a trapping house 14 which is designed as a centrally spaced casing opened at its rear side and provided respectively with an entrance 16 at two lateral sides of its front end, so cockroaches may enter into the trapping house from any one of two sloped passage 18 also provided on both sides of the front end of the trapping house 14. The sloped passage 18 is provided with a lot of holes 18a within which tasted materials, such as suger, may be put for luring cockroaches. Specially now referring Figure 3, in the central part of the trapping house 14, a sectional U-shaped rail 20 is transversely set on, both sides of which are respectively provided with a slender slot 22 for the horizontal shift of the connector 26 which connects to and between two slipping plates 24 and inlays into said two slots 22 of the rail 20. Furthermore, the inner wall of the trapping house 14 near said entrance 16 is equipped with a pedal switch 28 constituted by multiple small metal plates, which is used for switching on the motor 30 of the transmission mechanism 12 have the slipping plate 24 moved forward. (with refference to the transmission mechanism 12 and the mechanism of the slipping plate 24, there will have more detailed description hereinafter.)

The rear opening of said trapping house 14 is provided with a closed room 32, like a through, which is partitioned, and connectable, with the trapping house 14 by a turning plate 34 capable of opening or closing respectively in one direction.

As shown in Figure 4, the transmission mechanism 12 performs by means of a motor 30 trough a transmission gear set 38 to drive the first clutching-pully 40 and the second clutching-pully 42 rotating in counter direction to each other. The driven pully 40a of the first clutching-pully 40 is winded round by a steel wire 44 connected its another end to the front end of said connector 26 which is provided between two slipping plates 24. Further to refer Figure 4 – 5, the driven pully 42a of the second clutching-pully 42 is also winded round by a steel wire 46 connected its another end to a ring 48' set on the driven pully 40a of the first clutching-pully 40. Therefore, when the motor 30 runs in clock direction, the driving pully 40b of the first clutching-pully 40 will engage with its counterpart, the driven pully 40a, to rotate along arrow A direction and the steel wire 44 be rolled up to retract the slipping plate 24 along arrow C direction slipping back to its original position as appeared in Figure 2. However, due to the fact that the driven pulley 42a doesn't engage with the driven pully 42b in face to face, the driven pully 42a will run idle without any bad influence on the normal operation of the first clutching-pully 40. And when the mortor 30 runs in counterclockwise direction, the driving pully 42b of the second clutching-pully 42 will engage with its counterpart, the driven pully 42a, to rotate along arrow B direction, the result of which will roll up the steel wire 46 to retract the driven pully 40a of the first clutching-pully 40 from the engaging position with the driving pully 40b so as to have the driven pully 40a run idle. At this moment, because the tensive force resulted from the steel wire 44 on the front end of the slipping plate 24 disappears, the slipping plates will quickly move forward under the function of the tension spring 48 provided on the rear end of the connector 26. As soon as the extended portion 50 which is also provided on the rear end of the connector 26 touches the turning button 54 of the electric current reversing switch 52 provided on the upper side of rear end of the trapping house 14, the turning button 54 will be turned to position 1 of its scale to change the electric current direction of coil of the motor 30. Upon changing direction of said electric current to have the motor 30 run in clock direction, the driven pully 42a of the second clutching-pully 42 will become running idle as above described, and the driven pully 40a of the first clutching-pully will again engage with the driving pully under the function of restitutive force of a spring 56 and rotate together to roll up the steel wire 44 to retract the slipping plate 24 back to its original position. Also, said turning button 54 of the electric current reversing switch 52 is provided with a connecting wire 60 which is connected to the connector 26 provided between two slipping plates 24, so while the slipping plates 24 back to its original position, the turning button 54 will be turned to position 2 of its scale, due to the connecting wire 60 being pull straight. At this time, the electric current of motor's coil will change its direction again. Therefore, if any clockroaches enter into the trapping house 14 and touch the pedal switch 28, the motor 30 will be switched on to run in counterclockwise direction and the slipping plate 24 will immediately slip forward to send these clockroaches to the rear end of the trapping house 14. the slipping plates 24 will further bump away the turning plate 34, capable of opening or closing in one direction, provided at the rear end of the trapping house 14, under the impulsive force of the slipping plate 24 to sweep these clockroaches into a confinement cell 36. In such a performing, the trap will again restore its function for trapping cockroaches. Therefore, the trap may repeat its operating cycle all over again and catch lots of cockroaches by automatic operation in continuty.

0031858

CLAIMS:

1. An automatic trap for catching cockroach is mainly divided into two parts, including the upper part, the trapping mechanism , and the lower part, the transmission mechanism , in which the trapping mechanism is comprised of:

A trapping house which is designed as a centrally spaced casing opened at its rear side and provided respectively with an entrance at two lateral sides of its front end; and in the central part of the trapping house , a sectional U-shaped rail is transversely set on, both sides of which are respectively provided with a slender slot for the horizontal shift of the connector which connects to and between two slipping plates and inlays into said two slots of the rail;

Two sloped passages which are respectively provided on outside of the entrance of the trapping house ;

A pedal switch is equipped on the inner wall of the trapping house near the entrance for switching on the motor of the transmission mechanism to have the slipping plates moved forward ;

A collect room , like a trough, extended from the rear opening of the trapping house which is partitioned, and connectable, with the trapping house by a turning plate ;

An electric current reversing switch which is provided on the upper side of rear end of the trapping house The transmission mechanism      is used for controlling the moving of the slipping plate      , including the first clutching-pully      and the second clutching-pully      . which are driven by means of a motor and a transmission gear set      .


2.   An automatic trap for catching cockroach as claimed in claim 1, wherein the sloped passages      are respectively provided with a lot of holes      within which tasted materials may be put for iuring cockroaches.


3.   An automatic trap for catching cockroach as claimed in claim 1, wherein an extended portion      is extended from the rear end of the connector      , which is between slipping plates      , for turning the turning button of the electricity transmitting switch      to change the direction of electric current.


4.   An automatic trap for catching cockroach as claimed in claim 1, wherein the turning button      of the electric current reversing switch      is provided with a connecting wire      which is connected to the connector      of two slipping plates      .


5.   An automatic trap for catching cockroach as claimed in claim 1, wherein a tension spring      is provided on the rear end of the connector .

6. An automatic trap for catching cockroach as claimed in claim 1, wherein the driven pully . of the first clutching-pully is winded rund by a steel wire : connected its another end to the front end of said connector

7. An automatic trap for catching cockroach as claimed in claim 1, wherein the driven pully of the second clutching-pully is winded round by a steel wire connected its another end to a ring set ' on the driven pully of the first clutching-pully : so when __ the driven pully of the second clutching-pully rolls up the steel wire the driven pully of the first clutching-pully will be pull by a steel wire to retract from the engaging position with driving pully of the first clutching-pully . .

FIG.1
FIG.2
FIG.3
FIG.4
FIG.5
FIG.6

0031858

1/1

European Patent Office

**EUROPEAN SEARCH REPORT**

| DOCUMENTS CONSIDERED TO BE RELEVANT | | | ·CLASSIFICATION OF THE APPLICATION (Int. Cl.) |
|---|---|---|---|
| Category | Citation of document with indication, where appropriate, of relevant passages | Relevant to claim | |
| A | US − A − 1 632 276 (C. DE LA TORRIENTE) <br> * page 2, lines 1 to 42, fig. 1, 2, 6 to 8 * <br> --- <br> US − A − 2 873 551 (S. R. MISKO) <br> * column 4, lines 8 to 61; fig. 1, 3 * <br> ---- | 1 | A 01 M   1/12 |

TECHNICAL FIELDS SEARCHED (Int.Cl.)

A 01 M   1/10

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 14-08-1980 | SCHOFER |

EPO Form 1503.1   06.78